# FASCICULE DE BREVET EUROPEEN

(11) **EP 2 858 790 B1**
(45) Date de publication et mention de la délivrance du brevet: **02.03.2022**
(21) Numéro de dépôt: 13733345.6
(22) Date de dépôt: 05.06.2013
(51) Int. Cl.: B25J 5/00, B62D 57/024

(54) **ROBOT ROULANT COMPRENANT UN BRAS**
ROLLENDER ROBOTER MIT EINEM ARM
ROLLING ROBOT COMPRISING AN ARM

(30) Priorité: 07.06.2012 FR 1201640
(43) Date de publication de la demande: 15.04.2015
(73) Titulaire: NEXTER Systems, 78034 Versailles Cedex (FR)
(72) Inventeur: STEUX, Bruno, F-78400 Chatou (FR); BOURAOUI, Laurent, F-94240 L'Hay-les-Roses (FR)
(74) Mandataire: Cabinet Chaillot
(86) Numéro de dépôt international: PCT/FR2013/051277
(87) Numéro de publication internationale: WO 2013/182811

(56) Documents cités:
- WO-A1-2010/068198
- US-A1- 2008 277 172
- US-A1- 2011 031 044

## Description

### Domaine technique de l'invention - art antérieur

L'invention s'inscrit dans le domaine des robots roulants à usage professionnel, et plus particulièrement à usage militaire ou pour les applications de sécurité civile.

De tels robots se déplacent à l'aide de roues ou de chenilles et sont munis de différents équipements, parmi lesquels des caméras et des détecteurs, montés sur un corps occupant une partie de l'espace entre les roues ou les chenilles. Ils se déplacent à distance de leur opérateur humain, souvent dans des milieux dangereux pour celui-ci, et sont pilotés par radio.

Ils peuvent avoir pour missions, traditionnellement le déminage, mais aussi plus généralement l'inspection d'une zone en intérieur ou en extérieur telle que des locaux ou une rue dans une zone de combat.

On connait ainsi le robot SUGV de la société IRobot, avançant à l'aide de chenilles, et qui peut être équipé sur le terrain d'un bras articulé pour une intervention sur un engin explosif à désamorcer. Un tel robot, bien que déjà miniaturisé, reste assez lourd, et peut difficilement être transporté à la main ou dans un sac par un combattant.

On connait aussi le robot Dragon Runner de la société Qinetiq, qui peut aussi être équipé sur le terrain d'un bras articulé pour l'intervention sur un engin explosif à désamorcer. Il se déplace à une vitesse qui reste limitée, et n'est pas compatible avec une situation de combat rapproché. Sa garde au sol est assez basse.

Enfin, un robot appelé EyeDrive a été présenté par la société ODF. Il est susceptible d'être projeté à la main par un opérateur. Ce robot est plat et dispose de chenilles ou de roues lui permettant de se déplacer sur une face ou alternativement sur sa face opposé. Son corps est entièrement compris entre les deux plans de déplacement. L'image de la caméra est redressée en fonction de la face sur laquelle le robot tombe. Ce robot, notamment dans sa version à roues, ne dispose pas de moyens de se dégager d'une situation dans laquelle il est bloqué sur une pierre ou un obstacle.

Les demandes de brevets américains US 2008/0277172 A1 et US 2011/0031044 A1 divulguent un robot roulant selon le préambule de la revendication 1.

### Exposé de l'invention - avantages apportés par celle-ci

Dans le but d'améliorer la sécurité des personnels engagés dans les zones à risque, il est souhaitable de développer des robots capables d'effectuer les tâches les plus dangereuses. Ainsi, on souhaite qu'un robot puisse neutraliser un combattant en agissant à son encontre rapidement après être arrivé à sa proximité, par exemple sur un terrain de guérilla urbaine.

Il est notamment important, dans cette application, que le robot soit léger pour pouvoir être lancé à la main par son opérateur, qu'il soit ensuite rapide dans son déplacement, dès les premiers instants suivant sa projection, et qu'il soit capable de continuer à se déplacer sans contretemps après tout choc avec un obstacle, tel qu'un rebord de trottoir, une pierre, un mur.

Ainsi, on souhaite disposer de robots capables de prendre part au combat rapproché. Mais de tels robots peuvent aussi avoir des applications de sécurité civile, telle la surveillance d'une prison, ou l'aide au maintien de l'ordre dans des situations de type émeutes.

Pour répondre à ce besoin, il est proposé dans le présent document un robot roulant comprenant des moyens de déplacement lui permettant de se déplacer parallèlement à un premier plan de déplacement ou alternativement parallèlement à un deuxième plan de déplacement, ainsi qu'un corps dont le volume est cantonné entre les deux plans de déplacement, et le robot roulant comprend de plus un bras monté sur le corps et prenant soit une configuration de rangement dans lequel il est cantonné entre les deux plans de déplacement, soit une première configuration de déploiement dans laquelle il fait saillie à travers le premier plan de déplacement, soit encore une deuxième configuration de déploiement dans laquelle il fait saillie à travers le deuxième plan de déplacement.

Ce robot est jetable et renversable, car il peut se déplacer parallèlement à l'un ou à l'autre des plans de déplacement. Qui plus est, il est capable, grâce à son bras, de se dégager de rapidement d'une situation dans laquelle il serait bloqué sur une pierre ou un obstacle sur le sol. Ainsi, le dispositif est simple à utiliser et rapide, et est donc très efficace dans les situations de combat rapproché, pour l'interception d'un adversaire par exemple.

Le bras a une fonction de dégagement du robot si celui-ci est bloqué mais est aussi équipé pour recevoir une charge utile, tel qu'un instrument de mesure, ou un outil comme un explosif, ou encore un dispositif d'interception de personne. La forme intérieure du bras épouse la forme extérieure d'une embase de la charge utile, de telle sorte que la charge utile est protégée de manière à concilier la fonction de dégagement du bras avec la préservation de l'intégrité de la charge utile.

Dans différentes mises en oeuvre, le robot est caractérisé avantageusement de la manière suivante.

Tout d'abord, le bras peut être articulé en rotation autour d'un axe. La mise en oeuvre est simple, car une articulation unique permet un déploiement de grande ampleur. Un bras de grande dimension peut être mis en place, en position replié dans le volume du corps, et pivoter pour se positionner dressé au-delà de l'un ou de l'autre des plans de déplacement, avec une grande portion du bras faisant saillie.

Le bras peut être mû par un moteur dont la puissance est transmise par un réducteur planétaire ou à vis sans fin. On préférera un réducteur à vis sans fin quand le bras doit porter une lourde charge, et un réducteur planétaire si le bras doit pouvoir être remis en position replié à la main, par un opérateur.

Le robot dispose de plus, dans un mode de réalisation, d'une fonction de protection du bras. La fonction commande le mouvement du bras vers la configuration de rangement quand il est détecté que le robot a une vitesse ou une accélération supérieure à un seuil de sécurité.

Dans un mode de réalisation, le bras comprend une structure en pince pour recevoir une charge utile. Le bras peut aussi comprendre une surface d'engagement pour l'engagement d'une charge utile, constituée de deux plans parallèles se faisant face.

Le bras peut, dans certaines configurations d'équipement, comprendre un connecteur électrique pour transmettre des informations en provenance ou à destination d'une charge utile installée sur le bras ou de la puissance électrique à destination de la charge utile.

Le robot peut de plus comprendre un collecteur tournant pour faire fonctionner une charge utile, à installer sur le bras en rotation libre multi-tours. Il peut aussi comprendre un capteur de position angulaire pour une charge utile installée en rotation sur le bras. Le bras peut être équipé pour recevoir une charge utile à fixer par clipsage.

Le robot peut être également présenté avec une charge utile déjà fixée sur le bras. Ainsi, le bras est dans ce cas équipé d'une charge utile telle qu'un dispositif de neutralisation de personne, un explosif et un moyen de propulsion dudit explosif, ou un télémètre.

Le robot peut disposer d'une commande pour que, quand le robot est immobilisé dans une position bloquée, il utilise le bras pour se débloquer, en passant de la configuration de rangement à l'une des configurations de déploiement.

Le bras peut aussi, dans certaines applications, comprendre une antenne radio. De manière avantageuse, le robot est équipé de moteurs sans balais plats pour sa propulsion, qui permettent de gagner de l'espace dans le corps du robot, pour ainsi loger le bras dans sa configuration replié. Ces moteurs permettent au robot de se déplacer à une très grande vitesse.

Le robot roulant est, dans une version spécifique, conçu pour opérations militaires extérieures. Ainsi, il se distingue par exemple par une structure étanche, l'utilisation de matériaux résistants à la moisissure, comme le polyuréthane pour sa coque, ainsi que résistants au rayonnement solaire et au feu. Ainsi, le robot peut être utilisé sur un terrain d'opération extérieure militaire, et est en mesure de résister durablement aux conditions difficiles qu'il peut rencontrer sur un tel terrain.

Le robot est notamment fourni avec des roues, plus légères que des chenilles, et peut néanmoins se dégager de nombreux obstacles grâce à son bras. Ainsi, il est en mesure de se déplacer très rapidement en toutes circonstances et d'agir rapidement dans les situations délicates où son opérateur souhaite l'engager.

### Brève description des figures

L'invention va maintenant être décrite en relation avec les figures annexées suivantes.
La figure 1 présente une vue de coupe schématique d'un mode de réalisation de l'invention.
La figure 2 présente une vue de coupe schématique d'une variante du mode de réalisation de la figure 1.
La figure 3 présente une vue de trois quarts d'un mode de réalisation détaillé de l'invention, le robot étant présenté avec son capot ouvert.
La figure 4 présente une vue du corps du robot de la figure 3, capot refermé.
La figure 5 présente un aspect particulier d'un mode de réalisation, lors de la fixation d'une charge utile sur le bras du robot des figures 3 et 4.
La figure 6 présente le même aspect particulier, la charge utile étant fixée.
Les figures 7 et 8 présentent l'intérieur de la charge utile montée sur le bras du robot, dans un mode particulier d'utilisation.
La figure 9 présente le robot avec son bras en configuration de déploiement, muni d'un télémètre.
La figure 10 présente une vue de coupe schématique d'un autre mode de réalisation de l'invention.

### Description détaillée

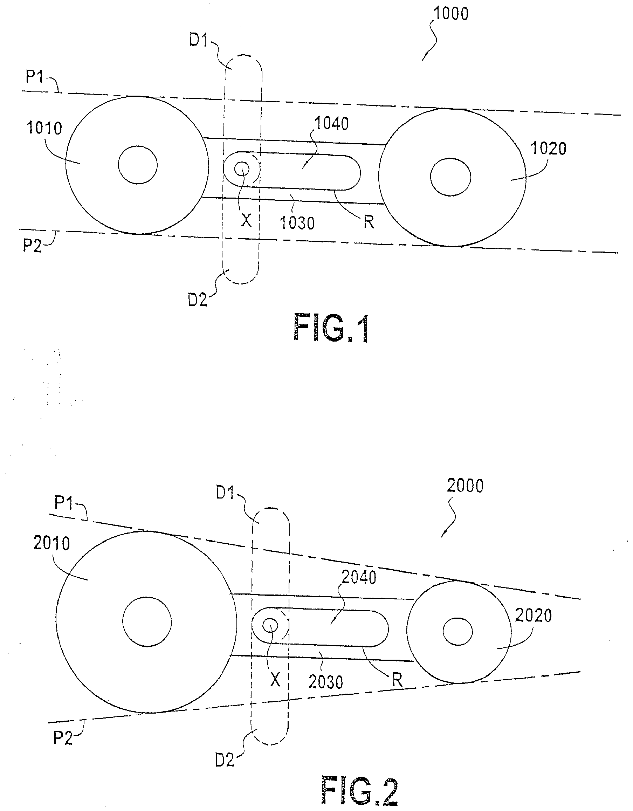

En **figure 1****,** on a représenté un mode de réalisation du robot 1000, en coupe. Le robot 1000 dispose de deux roues avant 1010, coaxiales, et de deux roues arrière 1020, coaxiales, et d'axe de rotation parallèle à l'axe des roues avant 1010. Les roues arrière 1020 sont de même diamètre que les roues avant 1010.

Le robot 1000 comprend de plus un corps 1030 d'épaisseur inférieure au diamètre des roues, et s'étendant dans le rectangle défini par celles-ci. Les roues sont fixées sur ce corps 1030 et le robot 1000 admet globalement un plan de symétrie passant par les axes des roues. Les roues définissent deux plans sur lequel le robot peut être posé et se déplacer : un plan P1 et un plan P2 qui sont ici parallèles, les roues avant et arrière ayant un même diamètre. Ainsi, le robot dispose de deux faces aux fonctions identiques sur le plan de la locomotion, définissant deux plans de déplacement P1 et P2.

Le robot 1000 est muni d'un bras 1040, par exemple articulé en rotation autour d'un axe X parallèle et coplanaire aux axes des roues. Le bras 1040 peut prendre au moins trois configurations. Une première configuration est une configuration de rangement R, dans laquelle le bras est confiné dans le volume du corps, ou du moins contraint de ne pas dépasser des deux plans P1 et P2. Ainsi, le robot 1000 peut rouler sur l'une ou l'autre de ses faces, indifféremment, quand le bras 1040 est en position de rangement, celui-ci étant cantonné entre les deux plans. Les deux autres configurations sont des configurations de déploiement, notées D1 et D2, dans lesquelles le bras fait saillie à travers l'un ou l'autre des deux plans P1 et P2. Ici, les configurations de déploiement sont atteintes par une rotation de 90° à partir de la configuration de rangement, mais une rotation d'un angle plus faible pourrait suffire pour atteindre une configuration permettant au bras de faire saillie à travers l'un ou l'autre des plans, et ayant une utilité fonctionnelle.

Le bras 1040 possède notamment deux fonctions : il peut porter une charge utile, qui sera détaillée plus loin, et il peut aussi servir au robot pour se dégager d'une position dans laquelle il est bloqué au sol sur une pierre ou un obstacle, en évoluant de sa position de rangement vers une configuration déployée, du côté du plan P1 ou P2 sur lequel le robot s'appuie au moment où il se trouve bloqué dans son déplacement.

En **figure 2****,** on a représenté une variante du mode de réalisation schématique de la figure 1. Les roues avant et arrière n'ont pas le même diamètre, et les plans de déplacement P1 et P2 ne sont pas parallèles l'un à l'autre.

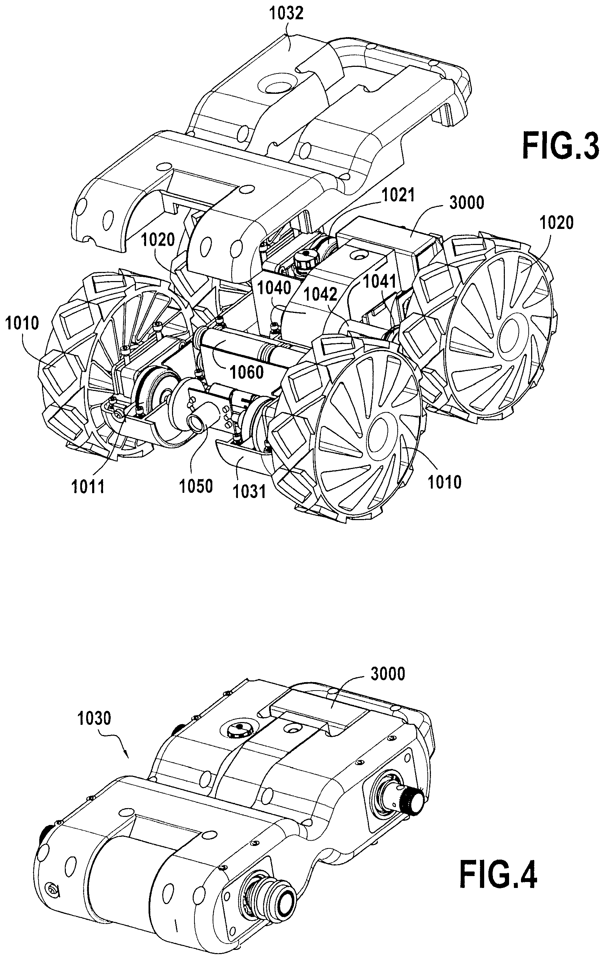

On remarquera, que ce soit au sujet de la figure 1 que de la figure 2, le robot peut avoir effectivement un avant et un arrière différenciés et avoir un fonctionnement privilégié vers l'avant, mais il peut aussi être capable de se déplacer indifféremment vers l'avant ou vers l'arrière, de telle sorte qu'il n'y ait pas de raison pour distinguer, sur la machine, un « avant » et un « arrière ». En **figure 3****,** on a représenté le robot 1000 avec son corps 1030 ouvert, par séparation des deux moitiés 1031 et 1032 d'un capot. Ce capot est par exemple en polyuréthane, mais d'autres matières comme l'ABS peuvent également être utilisées en fonction des choix de conception finale.

Le capot soutient les quatre roues 1010 et 1020, qui sont chacune actionnée par un moteur sans balai (moteur « brushless ») plat 1011 et 1021. Ces moteurs sont indépendants les uns des autres et alimentés par des batteries 1060, et commandés par une unité de commande (non représentée) recevant des ordres par radio.

Les roues ne sont pas orientables, mais une commande de vitesse différentes sur les roues de gauche et de droite permet de faire virer le robot d'un côté ou de l'autre. Ils peuvent permettre au robot de se déplacer à de grandes vitesses, par exemple jusqu'à 20 km/h.

Le robot est équipé d'une caméra 1050 placée entre les roues avant sur le corps 1030. La caméra 1050 est orientable. Le robot peut être équipé de quatre caméras, dont certaines capables de vision de nuit, à haute résolution. De manière remarquable, le robot 1000 possède un bras 1040, comme évoqué plus haut, qui est sur la figure 3 en position repliée. Ce bras 1030 est monté en rotation, et actionné par moteur de rotation 1041, agissant par l'intermédiaire d'un réducteur 1042, planétaire ou à vis sans fin.

Dans des applications où le bras est amené à porter de lourdes charges, par exemple une dizaine de kilogrammes d'explosif, un réducteur à vis sans fin est préféré. Dans des applications où l'utilisateur sera amené à replier manuellement le bras, un réducteur planétaire sera utilisé.

Le bras est représenté ici avec une charge utile 3000 de forme parallélépipédique rectangle. Elle trouve un logement adapté à sa forme dans le volume du corps, dans le capot 1031, 1032, la grande dimension de la charge utile 3000 se plaçant parallèlement aux axes des roues.

En **figure 4****,** on a représenté le corps 1030 du robot fermé, sans ses roues. Le bras 1040 est visible, ainsi que la charge 3000 qui est placée à son extrémité. Le bras est en configuration repliée.

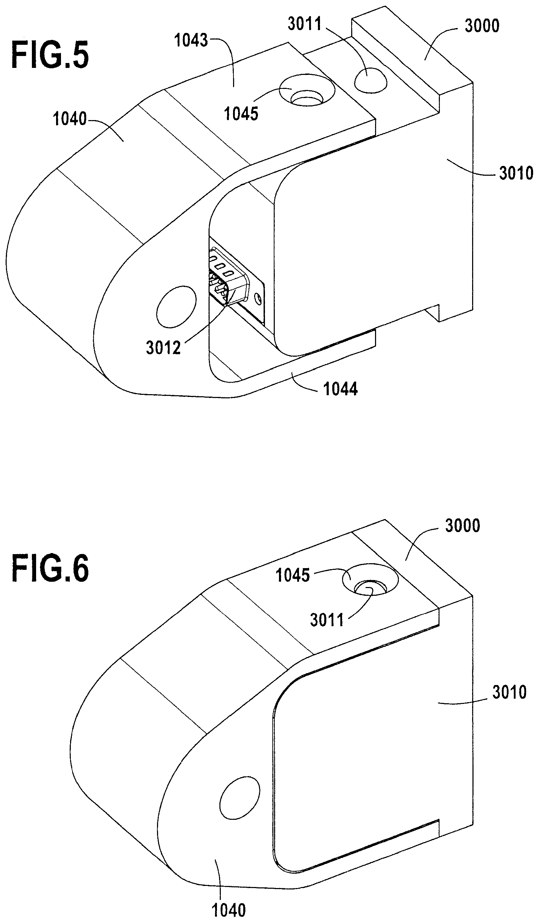

En **figure 5****,** on a représenté le bras 1040 et l'embase 3010 de la charge utile 3000. Le bras a une forme générale de pince, avec deux éléments de mâchoire 1043 et 1044 se faisant face. Ces deux bras sont percés chacun d'un orifice 1045 permettant de recevoir une bille de fixation 3011 de la charge utile, qui est ainsi insérée et retenue par clipsage. D'autres modes de fixation pourraient être choisis.

La **figure 6** présente l'embase de la charge utile une fois clipsée au bras 1040. On voit notamment la bille 3011 apparaissant au fond de l'orifice 1045. La forme extérieure de l'embase de la charge utile épouse la forme intérieure du bras. On remarque ici que la surface d'engagement entre le bras et la charge utile est constituée de deux surfaces parallèles, à savoir les deux surfaces intérieures des éléments de mâchoire 1043 et 1044. Une autre géométrie aurait pu être retenue, notamment un engagement par une douille de fixation cylindrique ou à l'aide d'une surface de guidage conique. De même, à la place d'un clipsage, d'autres fixations auraient pu être utilisées, telle que par exemple un système de vissage.

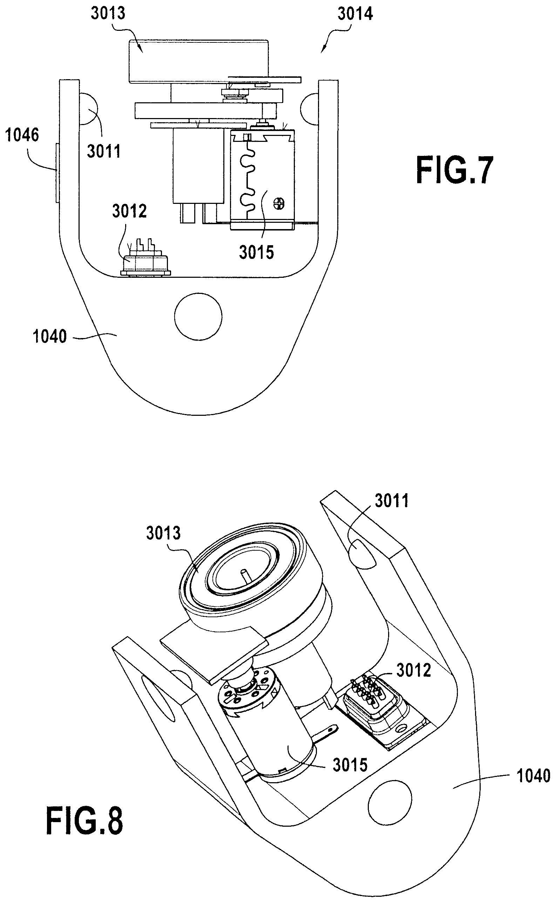

La **figure 7** présente l'intérieur de l'embase de la charge utile 3000, et son interaction avec le bras 1040. La charge utile retenue pour cette figure est un télémètre laser, qui est monté en rotation multi-tours continue, et qui, dans son fonctionnement, ne doit pas avoir à arrêter sa rotation et repartir en sens inverse. Comme on a pu l'apercevoir sur la figure 5, l'extrémité de l'embase 3010 présente à sa surface un connecteur électrique male 3012, qui se branche, lors de l'engagement de la charge utile dans le bras, dans un connecteur femelle correspondant. Cette connexion électrique permet non seulement d'apporter de l'électricité dans la charge utile, mais aussi de lui transmettre des commandes, et de recevoir en retour les informations éventuellement générées par la charge utile.

De plus, l'embase de la charge utile comprend un collecteur tournant 3013 pour faire fonctionner le télémètre installé sur le bras en rotation libre multi-tours. L'embase comprend également un capteur de position angulaire 3014 pour détecter la position du télémètre, qui peut avoir été tourné par un utilisateur. On distingue également un moteur 3015, destiné à faire tourner la charge utile autour d'un axe parallèle à la direction du bras,

Ces différents éléments sont également visibles en **figure 8****.**

Le bras 1040 peut aussi, dans certaines applications, comprendre une antenne radio 1046, notamment une antenne radio courte ou longue portée. Elle est visible en figure 7, et est présente en surface extérieure d'un des deux éléments de mâchoire du bras.

Le bras peut être équipé de toutes sortes de charges utiles, reposant sur l'embase 3010 représentée en figures 5 et 6. Notamment, il peut être équipé d'un dispositif de neutralisation de personne, comme un système de projection de billes, un générateur de flash lumineux, un fumigène, ou un pistolet à impulsion électrique. La charge utile peut aussi être un explosif, muni d'un moyen de propulsion à distance.

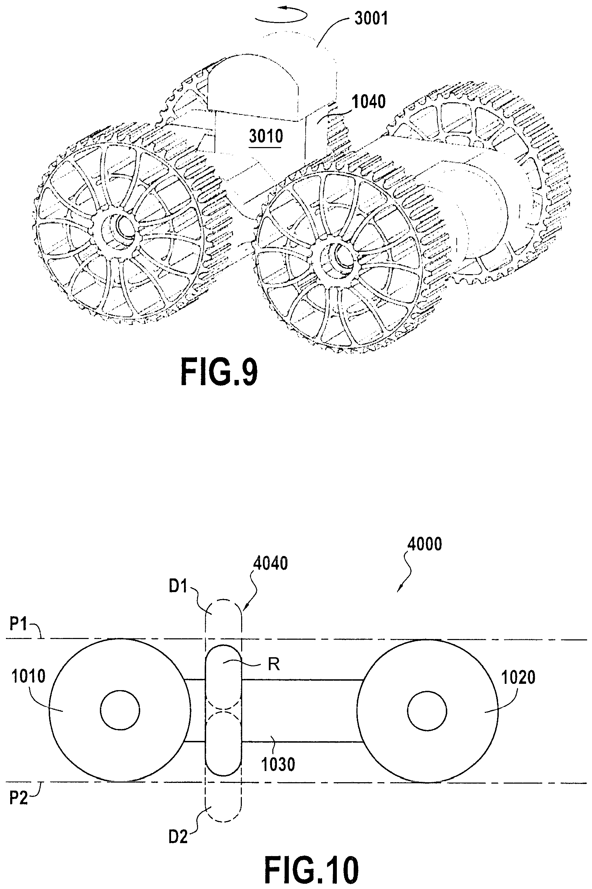

En **figure 9****,** c'est un télémètre 3001 qui est fixé sur l'extrémité du bras 1040, via l'embase 3010. Le télémètre est monté en rotation multi-tours continue par rapport à l'embase. La figure montre la configuration déployée du bras 1040. A la place du télémètre, une caméra peut aussi être installée. Le robot dispose de plus, d'une fonction automatique de protection du bras, commandant sa rétractation vers la configuration de rangement quand il est détecté que le robot a une vitesse ou une accélération supérieure à un seuil de sécurité.

Le robot peut aussi disposer d'une commande pour que, quand le robot est immobilisé dans une position bloquée, du fait d'un obstacle au sol, il utilise son bras pour se débloquer, en passant de la configuration de rangement R à l'une des configurations de déploiement D1 ou D2.

En **figure 10****,** on a représenté un mode de réalisation alternatif du bras du robot. Ici, le bras, référencé 4040, est en translation par rapport au corps 1030 du robot, perpendiculairement au plan défini par les roues. Il a une grande dimension plus courte que la distance entre les deux plans de déplacement P1 et P2. En position repliée, il ne dépasse ni du plan P1, ni du plan P2. En configuration de déploiement, il fait saillie à travers le premier ou le deuxième de ces plans. Le robot peut utiliser son bras pour se libérer d'une situation dans lequel il est bloqué sur une pierre ou un obstacle.

On précise que le robot peut être équipé de deux chenilles, ou de roues, au nombre de trois, quatre, ou six, notamment. Le corps du robot peut comprendre une coque en polyuréthane ou en ABS, le polyuréthane étant préféré pour ses propriétés de résistance. Les pneus des roues sont également choisis préférentiellement en polyuréthane. La structure est étanche et ignifugée.

L'invention a été décrite en relation avec les figures présentant de modes de réalisation particuliers, mais elle s'étend à toutes les variantes dans le cadre de la portée des revendications.

## Revendications

1. Robot roulant (1000 ; 2000) comprenant des moyens de déplacement (1010, 1020 ; 2010, 2020) lui permettant de se déplacer parallèlement à un premier plan de déplacement (P1) ou alternativement parallèlement à un deuxième plan de déplacement (P2), ainsi qu'un corps (1030 ; 2030) dont le volume est cantonné entre les deux plans de déplacement (P1, P2), le robot roulant comprenant de plus un bras (1040 ; 2040) monté sur le corps et prenant soit une configuration de rangement (R) dans lequel il est cantonné entre les deux plans de déplacement, soit une première configuration de déploiement (D1) dans laquelle il fait saillie à travers le premier plan de déplacement (P1), soit encore une deuxième configuration de déploiement (D2) dans laquelle il fait saillie à travers le deuxième plan de déplacement (P2), le bras ayant une fonction de dégagement du robot si celui-ci est bloqué mais étant aussi équipé pour recevoir une charge utile (3000), **caractérisé en ce que** la forme intérieure du bras (1040 ; 2040) épousant la forme extérieure d'une embase (3010) de la charge utile (3000), de telle sorte que la charge utile (3000) est protégée de manière à concilier la fonction de dégagement du bras (1040 ; 2040) avec la préservation de l'intégrité de la charge utile (3000).

2. Robot roulant selon la revendication 1, dans lequel le bras (1040 ; 2040) est articulé en rotation autour d'un axe (X).

3. Robot roulant selon l'une des revendications précédentes, dans lequel le bras (1040 ; 2040) est mû par un moteur dont la puissance est transmise par un réducteur planétaire ou à vis sans fin.

4. Robot roulant selon l'une des revendications précédentes, équipé de moteurs sans balais plats (1011, 1021) pour sa propulsion.

5. Robot roulant selon l'une des revendications précédentes, comprenant de plus une fonction de protection du bras (1040 ; 2040), commandant son rangement vers la configuration intégrée quand il est détecté que le robot a une vitesse ou une accélération supérieure à un seuil de sécurité.

6. Robot roulant selon l'une des revendications précédentes, disposant d'une commande pour que, quand le robot est immobilisé dans une position bloquée, il utilise le bras (1040, 2040, 4040) pour se débloquer, en passant de la configuration de rangement (R) à l'une des configurations de déploiement (D1, D2).

7. Robot roulant selon l'une des revendications précédentes, dans lequel le bras (1040 ; 2040) comprend une structure en pince pour recevoir une charge utile (3000).

8. Robot roulant selon l'une des revendications précédentes, le bras (1040 ; 2040) comprenant un connecteur électrique (3012) pour transmettre des informations en provenance ou à destination d'une charge utile (3000) installée sur le bras ou de la puissance électrique à destination de la charge utile (3000).

9. Robot roulant selon la revendication précédente, comprenant de plus un collecteur tournant (3013) pour faire fonctionner une charge utile (3000) installée sur le bras (1040 ; 2040) en rotation libre multi-tours.

10. Robot roulant selon l'une des revendications précédentes, comprenant de plus un capteur de position angulaire (3014) pour une charge utile (3000) installée en rotation sur le bras (1040 ; 2040).

11. Robot roulant selon l'une des revendications précédentes, dont le bras (1040 ; 2040) est équipé pour recevoir une charge utile (3000) à fixer par clipsage.

12. Robot roulant selon l'une des revendications précédentes, dans lequel dans lequel le bras (1040 ; 2040) est équipé d'une charge utile (3000) telle qu'un dispositif de neutralisation de personne, un explosif et un moyen de propulsion dudit explosif, ou un télémètre.

13. Robot roulant selon l'une des revendications précédentes, dans lequel le bras (1040 ; 2040) comprend une antenne radio.

14. Robot roulant selon l'une des revendications précédentes, équipé de roues (1010, 1020 ; 2010, 2020) ou de chenilles.

15. Robot roulant selon l'une des revendications précédentes, conçu pour opérations militaires extérieures.

## Patentansprüche

1. - Rollender Roboter (1000; 2000), umfassend Fortbewegungsmittel (1010, 1020; 2010, 2020), die ihm ermöglichen, sich parallel zu einer ersten Fortbewegungsebene (P1) oder alternativ parallel zu einer zweiten Fortbewegungsebene (P2) fortzubewegen, sowie einen Körper (1030; 2030), dessen Volumen zwischen zwei Fortbewegungsebenen (P1, P2) untergebracht ist, wobei der rollende Roboter außerdem einen Arm (1040; 2040) umfasst, der auf den Körper montiert ist, und entweder eine Aufbewahrungskonfiguration (R), in der er zwischen den zwei Fortbewegungsebenen untergebracht ist, oder eine erste Einsatzkonfiguration (D1), in der er durch die erste Fortbewegungsebene (P1) hervorsteht, oder auch eine zweite Einsatzkonfiguration (D2) einnimmt, in der er durch die zweite Fortbewegungsebene (P2) hervorsteht, wobei der Arm eine Funktion des Freisetzens des Roboters aufweist, wenn dieser blockiert ist, aber auch ausgestattet ist, um eine Nutzlast (3000) aufzunehmen, **dadurch gekennzeichnet, dass** die innere Form des Arms (1040; 2040) der äußeren Form einer Grundplatte (3010) der Nutzlast (3000) angepasst ist, so dass die Nutzlast (3000) derart geschützt ist, dass sie die Funktion des Freisetzens des Arms (1040; 2040) mit der Bewahrung der Integrität der Nutzlast (3000) vereinbart.

2. - Rollender Roboter nach Anspruch 1, wobei der Arm (1040; 2040) in Rotation um eine Achse (X) gelenkig verbunden ist.

3. - Rollender Roboter nach einem der vorhergehenden Ansprüche, wobei der Arm (1040; 2040) von einem Motor bewegt wird, dessen Kraft durch ein Planetengetriebe oder ein Schneckengetriebe übertragen wird.

4. - Rollender Roboter nach einem der vorhergehenden Ansprüche, ausgestattet mit flachen bürstenlosen Motoren (1011, 1021) für seinen Antrieb.

5. - Rollender Roboter nach einem der vorhergehenden Ansprüche, umfassend außerdem eine Funktion zum Schutz des Arms (1040; 2040), die seine Aufbewahrung hin zur integrierten Konfiguration führt, wenn nachgewiesen wird, dass der Roboter eine Geschwindigkeit und eine Beschleunigung aufweist, die höher als ein Sicherheitsschwellenwert sind.

6. - Rollender Roboter nach einem der vorhergehenden Ansprüche, der über eine Führung verfügt, damit, wenn der Roboter in einer blockierten Position immobilisiert ist, er den Arm (1040, 2040, 4040) verwendet, um sich durch den Übergang von der Aufbewahrungskonfiguration (R) in eine der Einsatzkonfigurationen (D1, D2) freizusetzen.

7. - Rollender Roboter nach einem der vorhergehenden Ansprüche, wobei der Arm (1040; 2040) eine Zangenstruktur aufweist, um eine Nutzlast (3000) aufzunehmen.

8. - Rollender Roboter nach einem der vorhergehenden Ansprüche, wobei der Arm (1040; 2040) einen elektrischen Verbinder (3012) umfasst, um Informationen zu übertragen, die von einer Nutzlast (3000) stammen oder auf diese gerichtet sind, die auf dem Arm installiert ist, oder eine elektrische Leistung, die auf die Nutzlast (3000) gerichtet ist.

9. - Rollender Roboter nach einem der vorhergehenden Ansprüche, umfassend außerdem einen drehbaren Kollektor (3013), um eine Nutzlast (3000), die auf dem Arm (1040; 2040) installiert ist, in freier Rotation in zahlreichen Drehungen funktionieren zu lassen.

10. - Rollender Roboter nach einem der vorhergehenden Ansprüche, umfassend außerdem einen Winkelpositionssensor (3014) für eine Nutzlast (3000), die in Rotation auf dem Arm (1040; 2040) installiert ist.

11. - Rollender Roboter nach einem der vorhergehenden Ansprüche, wobei der Arm (1040; 2040) ausgestattet ist, um eine Nutzlast (3000) zu empfangen, die durch Klipsen befestigt werden soll.

12. - Rollender Roboter nach einem der vorhergehenden Ansprüche, wobei der Arm (1040; 2040) mit einer Nutzlast (3000) wie z. B. einer Vorrichtung zur Personenneutralisierung, einem Sprengstoff und einem Mittel zum Antrieb des Sprengstoffs oder einem Entfernungsmesser ausgestattet ist.

13. - Rollender Roboter nach einem der vorhergehenden Ansprüche, wobei der Arm (1040; 2040) eine Funkantenne umfasst.

14. - Rollender Roboter nach einem der vorhergehenden Ansprüche, ausgestattet mit Rädern (1010, 1020; 2010, 2020) oder mit Ketten.

15. - Rollender Roboter nach einem der vorhergehenden Ansprüche, entworfen für externe militärische Operationen.

## Claims

1. - Rolling robot (1000; 2000) comprising moving means (1010, 1020; 2010, 2020) allowing it to move in parallel to a first plane of motion (P1) or, alternatively, in parallel to a second plane of motion (P2), as well as a body (1030; 2030), the volume of which is confined between both planes of motion (P1, P2), the rolling robot also comprising an arm (1040; 2040) mounted on the body and adopting either a storage configuration (R), in which it is confined between both planes of motion, or a first deployment configuration (D1), in which it protrudes through the first plane of motion (P1), or a second deployment configuration (D2) in which it protrudes through the second plane of motion (P2), the arm having a function of disengaging the robot if it is blocked but also being equipped to receive a payload (3000), **characterised in that** the inner shape of the arm (1040; 2040) fits closely the outer shape of a base (3010) of the payload (3000), such that the payload (3000) is protected so as to reconcile the disengaging function of the arm (1040; 2040) and the payload (3000) integrity protection.

2. - The rolling robot according to claim 1, wherein the arm (1040; 2040) is rotatably articulated around an axis (X).

3. - The rolling robot according to one of the preceding claims, wherein the arm (1040; 2040) is moved by a motor, the power of which is transmitted by a planetary or endless screw speed reducer.

4. - The rolling robot according to one of the preceding claims, equipped with flat brushless motors (1011, 1021) for its propulsion.

5. - The rolling robot according to one of the preceding claims, comprising also a function for protecting the arm (1040; 2040), controlling the storage thereof to the integrated configuration when it is detected that the robot has a speed or acceleration higher than a security threshold.

6. - The rolling robot according to one of the preceding claims, having a control so that, when the robot is immobilized in a blocked position, it uses the arm (1040, 2040, 4040) to unblock itself, by passing from the storage configuration (R) to one of the deployment configurations (D1, D2).

7. - The rolling robot according to one of the preceding claims, wherein the arm (1040; 2040) comprises a clamp structure for receiving a payload (3000).

8. - The rolling robot according to one of the preceding claims, wherein the arm (1040; 2040) comprises an electrical connector (3012) for transmitting information from or to a payload (3000) installed on the arm, or electrical power to the payload (3000).

9. - The rolling robot according to the preceding claim, comprising also a rotating manifold (3013) for operating a payload (3000) installed on the arm (1040; 2040) with a multi-turn free rotation.

10. - The rolling robot according to one of the preceding claims, comprising also an angular position sensor (3014) for a payload (3000) rotatably installed on the arm (1040; 204).

11. - The rolling robot according to one of the preceding claims, wherein the arm (1040; 2040) is equipped to receive a payload (3000) to be attached by clipage.

12. - The rolling robot according to one of the preceding claims, wherein the arm (1040; 2040) is equipped with a payload (3000) such as a person neutralization device, an explosive and a means for propelling said explosive, or a range finder.

13. - The rolling robot according to one of the preceding claims, wherein the arm (1040; 2040) comprises a radio antenna.

14. - The rolling robot according to one of the preceding claims, equipped with wheels (1010, 1020; 2010, 2020) or tracks.

15. - The rolling robot according to one of the preceding claims, adapted for outside military operations.
